Europäisches Patentamt

European Patent Office

Office européen des brevets

(19)

(11) **EP 0 756 398 B1**

(12) **FASCICULE DE BREVET EUROPEEN**

(45) Date de publication et mention
de la délivrance du brevet:
**04.04.2001 Bulletin 2001/14**

(51) Int Cl.⁷: **H04L 9/30**

(21) Numéro de dépôt: **96202029.3**

(22) Date de dépôt: **17.07.1996**

(54) **Système et procédé de communication de messages cryptés selon un procédé de type R.S.A. avec réduction modulaire pour obtenir un décryptage rapide**

System und Verfahren zur Kommunikation von verschlüsselten Nachrichten unter Verwendung von RSA mit modularer Reduktion für schnelle Entschlüsselung

System and method for communicating encrypted messages using RSA with modular reduction to provide fast decryption

(84) Etats contractants désignés:
**DE FR GB**

(30) Priorité: **26.07.1995 FR 9509085**

(43) Date de publication de la demande:
**29.01.1997 Bulletin 1997/05**

(73) Titulaire: **OBERTHUR CARD SYSTEMS SA**
**75017 Paris (FR)**

(72) Inventeur: **Naciri, Robert**
**75008 Paris (FR)**

(74) Mandataire: **Barbin le Bourhis, Joel et al**
**Cabinet Bonnet-Thirion,**
**12, Avenue de la Grande-Armée**
**75017 Paris (FR)**

(56) Documents cités:
- **ELECTRONICS LETTERS, vol. 18, no. 21, 14 Octobre 1982, STEVENAGE GB, pages 905-907, XP000577331 J.-J.QUISQUATER & C.COUVREUR: "FAST DECIPHERMENT ALGORITHM FOR RSA PUBLIC-KEY CRYPTOSYSTEM"**
- **ELECTRONICS LETTERS, vol. 21, no. 17, 15 Août 1985, STEVENAGE GB, page 761 XP000579087 S.B.MOHAN & B.S.ADIGA: "FAST ALGORITHMS FOR IMPLEMENTING RSA PUBLIC KEY CRYPTOSYSTEM"**

**Description**

La présente invention concerne un système de communication de messages cryptés selon un procédé de type R.S.A. impliquant des nombres-clés "d" et "e" et un nombre module N tel que "N" est le produit de deux facteurs "p" et "q" qui sont des nombres premiers N = p.q et que e.d = $1_{\text{mod}\varphi(N)}$ où $\varphi(N)$ est la fonction indicateur d'Euler, système comportant d'une part au moins un dispositif de cryptage formé :

- de moyens de découpage pour découper le message à crypter en au moins une partie de message à crypter,
- de moyens d'exponentiation pour effectuer, sur chaque partie de message à crypter, une opération d'exponentiation modulaire de module "N" et avec un exposant égal à un premier desdits nombres clé, en vue de fournir une partie de message cryptée et d'autre part au moins un dispositif de décryptage.

L'invention concerne aussi un procédé mis en application dans le système, un dispositif utilisateur, genre carte à microcircuit comportant sur le même support un dispositif de cryptage et un dispositif de décryptage et un centre serveur dit de confiance pour traiter des informations entre les différents dispositifs utilisateurs.

Un procédé de ce genre est décrit dans l'article intitulé "Fast decipherement algorithm for a public-Key Cryptosystem" avec comme auteurs MM. J.J. Quisquater et C. Couvreur, paru dans la revue ELECTRONICS LETTERS du 14 OCTOBRE 1982. Ce procédé implique l'utilisation du théorème du reste chinois pour obtenir un décryptage rapide sans nuire aux qualités du procédé R.S.A.

La présente invention, basée aussi sur le théorème du reste chinois, propose un système pour lequel le procédé de décryptage est encore, dans une très large mesure, amélioré en ce qui concerne la rapidité du processus de décryptage.

Pour cela, un tel système est remarquable en ce qu'il comporte au moins un dispositif de décryptage formé :

- de moyens de détermination de module pour déterminer un module de décryptage choisi parmi lesdits facteurs,
- de premiers moyens de réduction modulaire pour faire une première réduction modulaire sur le nombre "d" avec un module égal audit module de décryptage diminué d'une unité pour fournir un nombre réduit,
- de deuxièmes moyens de réduction pour faire une deuxième réduction modulaire sur chaque partie de message cryptée avec un module égal audit module de décryptage en vue de fournir une partie de message cryptée réduite,
- de deuxièmes moyens d'exponentiation pour effectuer une exponentiation modulaire sur chaque partie de message cryptée réduite avec un module égal audit module de décryptage et avec un exposant égal audit nombre réduit en vue de rétablir ledit message.

Ainsi grâce aux mesures préconisées par l'invention, il n'est plus nécessaire d'effectuer l'opération de combinaison des restes voir formule (1) de l'article précité.

La description suivante faite en regard des dessins ci-annexés, le tout donné à titre d'exemple non limitatif, fera bien comprendre comment l'invention peut être réalisée.

La figure 1 montre un système de communication conforme à l'invention.
La figure 2 montre un organigramme de cryptage conforme à l'invention.
La figure 3 montre un organigramme de décryptage conforme à l'invention.
La figure 4 montre le schéma d'un dispositif utilisateur.
La figure 5 montre un système conforme à l'invention impliquant un serveur dit de confiance et une pluralité de dispositifs entre utilisateurs.

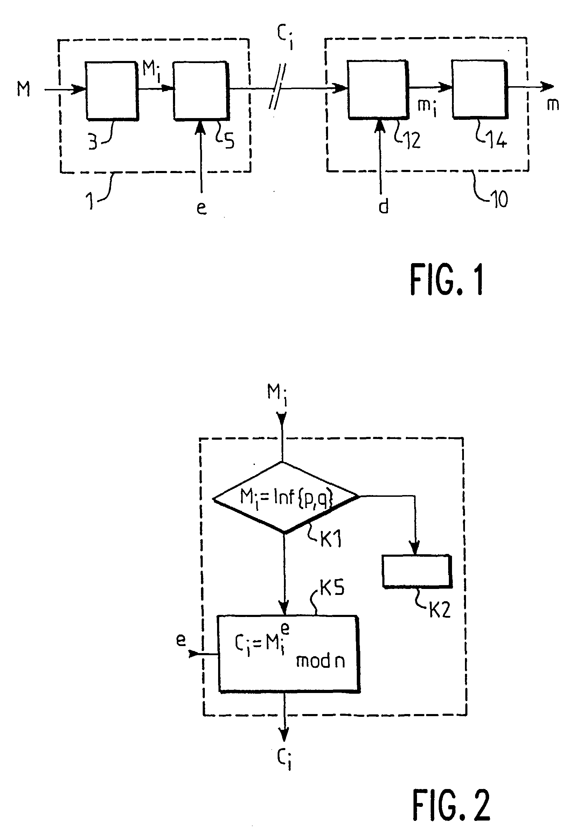

A la figure 1, la référence 1 indique le dispositif de cryptage. Celui-ci reçoit un message M par exemple "BONJOUR". Ce message est découpé en parties de message à crypter par des moyens de découpage 3. Ces parties sont constituées par chacune des lettres qui le compose et l'on obtient une suite de codes numériques, par exemple les codes numériques en décimal M1 = 66, M2 = 79, M3 = 78, M4 = 74, M5 = 79, M6 = 85, M7 = 82 qui représentent les codes ASCI de "BONJOUR". Des moyens d'exponentiation 5 effectuent des exponentiations sur ces codes numériques en prenant des paramètres "e" et "N" selon des mesures dont la première découle directement de l'invention :

- On prend des nombres p et q supérieurs à 255 :

$$p = 263 \text{ et } q = 311 \text{ d'où } N = p.q = 81793.$$

- On choisit "e" tel qu'il soit premier avec p-1 et q-1 soit :

$$e = 17.$$

- On détermine maintenant d : $e.d = 1_{MOD\ \varphi(N)}$

Dans le cas où p et q sont premiers $\varphi(N) = (p-1).(q-1)$ soit :

$$e.d = 1_{mod(40610)}.$$

Parmi les "d" qui satisfont la relation ci-dessus, on peut prendre 54943. En principe "d" n'est pas connu au niveau du dispositif de cryptage 1. Les moyens 5 peuvent alors coder le message en effectuant sur chacun des codes précités l'opération d'exponentiation modulaire :

$$Ci = Mi^{17}{}_{mod(N)}\ i=1...7$$

d'où le message codé comportant les parties cryptées :

$$C1 = 62302,\ C2 = 47322,\ C3 = 74978,\ C4 = 00285,\ C5 = 47322,$$

$$C6 = 09270,\ C7 = 54110.$$

Conformément à l'invention, pour décrypter ce message, il est prévu un dispositif de décryptage 10. Ce dispositif utilise un premier moyen de détermination de module de décryptage parmi les nombres "p" et "q", on choisit, de préférence le plus petit, pour s'économiser des calculs, soit :

$$p\ (= 263)$$

des deuxièmes moyens effectuent l'opération de réduction modulaire sur le nombre "d"

$$d_r = 54943\ mod\ _{262}$$

$$= 185$$

On réduit ensuite, selon le module "p", les parties de messages cryptées.

$$C_r 1 = 62302\ mod\ _{263}$$

$$= 234$$

et respectivement $C_r 2 = 245$, $C_r 3 = 023$, $C_r 4 = 022$, $C_r 5 = 245$, $C_r 6 = 065$, $C_r 7 = 195$, d'où les parties de message décryptées :

$$m_1 = C_r 1^{185}{}_{mod\ 263} = 66$$

$$m_2 = C_r 2^{185}{}_{mod\ 263} = 79$$

$$m_3 = C_r 3^{185}{}_{mod\ 263} = 78$$

$$m_4 = C_r4^{185}{}_{\text{mod } 263} = 74$$

$$m_5 = C_r5^{185}{}_{\text{mod } 263} = 79$$

$$m_6 = C_r6^{185}{}_{\text{mod } 263} = 85$$

$$m_7 = C_r7^{185}{}_{\text{mod } 263} = 82$$

Le message "m" est alors restitué par concaténation et par transcription en caractères usuels par les moyens de reconstitution finaux 4. Si tout s'est bien passé, m = M.

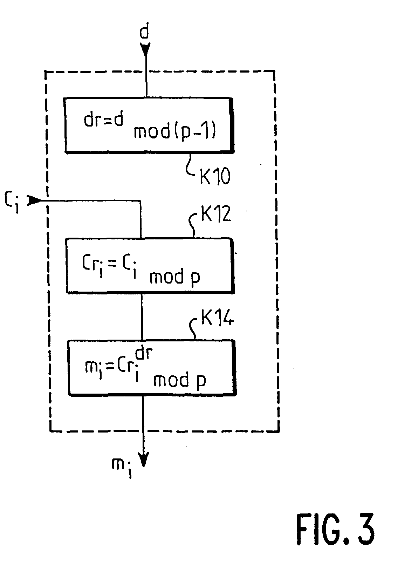

Le dispositif de cryptage 1 et le dispositif de décryptage 10 sont en fait réalisés à partir de processeurs programmés pour exécuter les organigrammes montrés aux figures 2 et 3 suivantes.

L'organigramme de la figure 2 explicite le fonctionnement du dispositif 1. La case K1 indique un test effectué sur chaque partie de message cryptée. Si cette valeur excède celle du module de décryptage choisi (donc le plus petit parmi "p" et "q"), alors, on déclare qu'il y a erreur à la case K2. Sinon, on passe à la case K5 où l'opération de cryptage proprement dite est effectuée, c'est-à-dire une exponentiation modulaire. On obtient ainsi des parties de messages cryptées Ci.

L'organigramme de la figure 3, montre les opérations de décryptage effectuées par le dispositif de décryptage 10. Cet organigramme montre à la case K10 une opération préalable de réduction sur le nombre d pour fournir un nombre clé réduit "dr". La case K12 est une opération de réduction modulaire selon "p" effectuée sur les parties de messages cryptées et la case K14 une exponentiation modulaire de module "p" et dont l'exposant est "dr" sur les parties de message cryptées.

Les dispositifs de cryptage et de décryptage peuvent être insérés sur un même support pour constituer ainsi un dispositif utilisateur. Les dispositifs peuvent alors communiquer entre eux en utilisant le procédé de cryptage de l'invention.

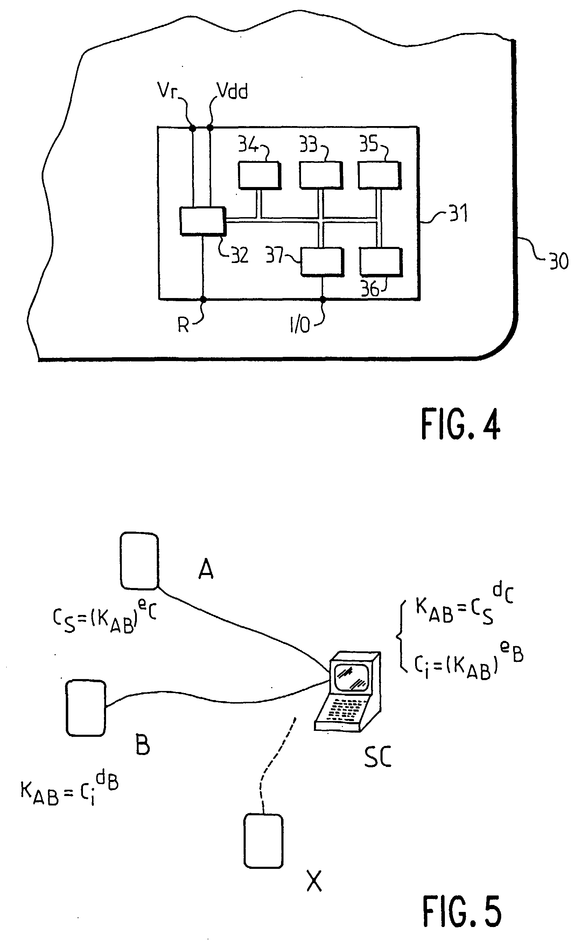

La figure 4 montre la structure d'un dispositif utilisateur. Ce dispositif est réalisé à base d'un micro-contrôleur sécurisé d'un point de vue physique tel, par exemple, que le 83C852 fabriqué par Philips. Un tel micro-contrôleur 31 est représenté sur la figure 4 et composé à partir d'un microprocesseur 32, d'une mémoire vive 33 et d'une mémoire morte 34 qui contient notamment des instructions de fonctionnement pour la mise en oeuvre de l'invention, notamment les opérations de cryptage et de décryptage déjà décrites. Il comporte aussi une mémoire EEPROM 35 pour contenir différentes données telles que la clé secrète de la carte, la clé publique d'un tiers avec lequel elle échange des informations... Il est également composé d'une unité de calcul 36 pour prendre en charge les opérations nécessaires à la réalisation des fonctions de cryptographie, d'une unité 37 de gestion des entrées/sorties reliée en outre à une entrée I/O du micro-contrôleur 31. Les éléments précités du micro-contrôleur 31 sont reliés entre eux par un bus 38.

Tout détail complémentaire peut être trouvé dans la notice du micro-contrôleur 83C852 précité.

Un exemple important d'application de l'invention est le transfert de clé DES au moyen de RSA comme cela est évoqué dans l'article "Threats of Privacy and Public Keys for protection" de Jim Bidzos paru dans le document PROCEEDINGS OF COMPCON 91, 36th IEEE COMPUTER SOCIETY INTERNATIONAL CONFERENCE - du 25 février au 1er mars 1991, San Fransisco - NEW YORK (US). Le protocole pour l'échange de la clé DES de session entre deux utilisateurs A et B par l'intermédiaire d'un canal public, peut être le suivant.

Soient $\{n_A, d_A\}$ et $\{n_B, d_B\}$ les clés secrètes respectives des utilisateurs A et B.

Par exemple A veut transmettre la clé de session $K_S$ à B.

-   **Utilisateur A.**

$$m = K_S$$

On effectue le chiffrement en utilisant la clé publique $e_B$

$$C_{AB} = m^{e}B$$

et on transfère le cryptogramme $C_{AB}$ via le canal public.

- **Utilisateur B.**

> réception du cryptogramme $C_{AB}$
> déchiffrement du cryptogramme m = $C_{AB}{}^{d}B$
> utilisation de la clé $K_S$.

Généralement $K_S$ est largement inférieure à une clé RSA.

$K_S$ peut être une clé de session DES de l'ordre de 56 éléments binaires et p et q sont de l'ordre de 256 bits.

Bien des organismes officiels interdisent de chiffrer les messages dans les communications publiques. L'invention s'applique particulièrement bien lorsque pour éviter cet interdit, on utilise un serveur de confiance SC.

On a représenté ce cas à la figure 5. Cette figure illustre le cas où une pluralité de dispositifs utilisateurs A, B,..X peuvent communiquer l'un avec l'autre par l'intermédiaire d'un serveur de confiance SC. Ce serveur SC a toutes les connaissances pour connaître, en clair, tous les messages qu'échangent les différents utilisateurs.

En guise d'exemple, on explicite le cas où l'utilisateur A veut communiquer une clé DES $K_{AB}$ à l'utilisateur B. Alors, A chiffre la clé $K_{AB}$ à l'aide de la clé publique $e_B$ du serveur SC qui lui-même la déchiffre dès sa réception, puis la chiffre avec la clé publique $e_B$ de B. Enfin B déchiffre le cryptogramme en vue de retrouver la clé initialement émise par A.

On voit donc que dans ce cas, le procédé s'applique aussi bien au niveau du décryptage de l'utilisateur B que de celui du serveur SC. Ainsi, l'invention est mise à profit pour obtenir une bonne disponibilité du serveur pour une pluralité d'utilisateurs. Le gain en calculs apporté par l'invention est particulièrement apprécié.


**Revendications**

1.  Système de communication de messages cryptés selon un procédé de type R.S.A. impliquant des nombres clés "d" et "e" et un nombre module N tel que "N" est le produit de deux facteurs "p" et "q" qui sont des nombres premiers N = p.q et que e.d = $1_{mod\varphi(N)}$, où $\varphi(N)$ est la fonction indicateur d'Euler, système comportant, d'une part, au moins un dispositif de cryptage formé :

    -   de moyens de découpage (3) pour découper le message à crypter en au moins une partie de message à crypter, inférieure au plus petit des facteurs p et q,
    -   de moyens d'exponentiation (5) pour effectuer, sur chaque partie de message à crypter, une opération d'exponentiation modulaire de module "N" et avec un exposant égal à un premier desdits nombres clé, en vue de fournir une partie de message cryptée, et d'autre part, au moins un dispositif de décryptage, <u>caractérisé en ce que</u> le dispositif de décryptage est formé :
    -   de moyens de détermination de module (10, 14) pour déterminer un module de décryptage choisi parmi lesdits facteurs,
    -   de premiers moyens de réduction modulaire (10, 12) pour faire une première réduction modulaire sur le nombre "d" avec un module égal audit module de décryptage diminué d'une unité pour fournir un nombre réduit,
    -   de deuxièmes moyens de réduction (K12) pour faire une deuxième réduction modulaire sur chaque partie de message cryptée avec un module égal audit module de décryptage en vue de fournir une partie de message cryptée réduite,
    -   de deuxièmes moyens d'exponentiation (K14) pour effectuer une exponentiation modulaire sur chaque partie de message cryptée réduite avec un module égal audit module de décryptage et avec un exposant égal audit nombre réduit en vue de rétablir ledit message.

2.  Procédé de cryptage-décryptage du type R.S.A. selon lequel pour crypter un message :

    -   on définit des nombre de clés "d" et "e" et un nombre module N tel que "N" est le produit de deux facteurs "p" et "q" qui sont des nombres premiers N = p.q et que e.d = $1_{mod\varphi\,(N)}$, où $\varphi(N)$ est la fonction indicateur d'Euler,
    -   on décompose (3) ledit message en parties de message à crypter,
    -   chaque partie subit une opération d'exponentiation (5) modulaire de module "N" et avec un exposant égal à un premier desdits nombres clé, pour fournir des parties de messages cryptées, et pour le décrypter :
    -   les parties de messages cryptées subissent une opération d'exponentiation de décryptage pour fournir des parties de messages décryptées,

    <u>caractérisé en ce que:</u>

- les parties de messages à crypter étant présentées sous forme de nombres inférieurs au plus petit des facteurs p et q,
- l'opération d'exponentiation de décryptage comporte :

  - une étape de détermination d'un module de décryptage (10, 14) choisi parmi lesdits facteurs,
  - une étape préalable pour faire une première réduction modulaire (10, 12) sur le nombre "d" avec un module égal audit module de décryptage diminué d'une unité pour fournir un nombre réduit,
  - une étape pour faire une deuxième réduction modulaire (K12) sur les parties de messages cryptées avec un module égal audit module de décryptage pour fournir des parties de messages cryptées réduites,
  - une étape d'exponentiation modulaire (K14) effectuée sur les parties de messages cryptées réduites avec un module égal audit module de décryptage et avec un exposant égal audit nombre réduit.

3. Utilisation du système de communication de messages cryptés selon la revendication 1 dans un dispositif utilisateur, tel que carte à puce, comportant un dispositif de cryptage formé :

   - des moyens de découpage (3) pour découper le message à crypter en au moins une partie de message à crypter,
   - des moyens d'exponentiation (5) pour effectuer, sur chaque partie de message à crypter, une opération d'exponentiation modulaire de module "N" et avec un exposant égal à un premier desdits nombres clé, en vue de fournir une partie de message cryptée, et au moins un dispositif de décryptage, caractérisé en ce que le dispositif de décryptage est formé :
   - de moyens de détermination de module (10, 14) pour déterminer un module de décryptage choisi parmi lesdits facteurs,
   - de premiers moyens de réduction modulaire (10, 12) pour faire une première réduction modulaire sur le nombre "d" avec un module égal audit module de décryptage diminué d'une unité pour fournir un nombre réduit,
   - de deuxièmes moyens de réduction (K12) pour faire une deuxième réduction modulaire sur chaque partie de message cryptée avec un module égal audit module de décryptage en vue de fournir une partie de message cryptée réduite,
   - de deuxièmes moyens d'exponentiation (K14) pour effectuer une exponentiation modulaire sur chaque partie de message cryptée réduite avec un module égal audit module de décryptage et avec un exposant égal audit nombre réduit en vue de rétablir ledit message.

4. Utilisation du système de communication de messages cryptés selon la revendication 1 dans un serveur comportant un dispositif de cryptage et un dispositif de décryptage pour servir d'intermédiaires avec des dispositifs utilisateurs, caractérisé en ce que son dispositif de décryptage est formé :

   - de moyens de détermination de module (10, 14) pour déterminer un module de décryptage choisi parmi lesdits facteurs,
   - de premiers moyens de réduction modulaire (10, 12) pour faire une première réduction modulaire sur le nombre "d" avec un module égal audit module de décryptage diminué d'une unité en vue de fournir un nombre réduit,
   - de deuxièmes moyens de réduction (K12) pour faire une deuxième réduction modulaire sur chaque partie de message cryptée avec un module égal audit module de décryptage en vue de fournir une partie de message cryptée réduite,
   - de deuxièmes moyens d'exponentiation (K14) pour effectuer une exponentiation modulaire sur chaque partie de message cryptée réduite avec un module égal audit module de décryptage et avec un exposant égal audit nombre réduit, en vue de rétablir ledit message.

## Claims

1. System for communication of encrypted messages by a process of R.S.A. type involving key numbers "d" and "e" and a modulus number N such that "N" is the product of two factors "p" and "q" which are prime numbers $N = p.q$ and that $e.d = 1_{mod\psi(N)}$ where $\psi(N)$ is the Euler indicator function, which system includes on the one hand at least one encryption device formed:

   - of slicing means (3) for slicing the message to be encrypted into at least one message part to be encrypted, smaller than the smaller of the factors p and q,
   - of exponentiation means (5) to perform, on each message part to be encrypted, a modular exponentiation operation of modulus "N" and with an exponent equal to a first of the said key numbers, in order to provide an encrypted message part and on the other hand at least one decryption device, <u>characterised by the fact that</u> the decryption device is formed:

- of modulus determination means (10, 14) to determine a decryption modulus selected from the said factors,
- of first modular reduction means (10, 12) to perform a first modular reduction on the number "d" with a modulus equal to the said decryption modulus decreased by one unit to provide a reduced number,
- of second reduction means (K12) to perform to a second modular reduction on each encrypted message part with a modulus equal to the said decryption modulus in order to provide a reduced encrypted message part,
- of second exponentiation means (K14) to perform a modular exponentiation on each reduced encrypted message part with a modulus equal to the said decryption modulus and with an exponent equal to the said reduced number in order to restore the said message.

2. Encryption-decryption process of R.S.A. type in accordance with which to encrypt a message:

- key numbers "d" and "e" and a modulus number N are defined such that "N" is the product of two factors "p" and "q" which are prime numbers N = p.q and that $e.d = 1_{mod \psi(N)}$ in which $\psi(N)$ is the Euler indicator function,
- the said message is broken down (3) into message parts to be encrypted,
- each part undergoes a modular exponentiation operation (5) of modulus "N" and with an exponent equal to a first of the of the said key numbers, to provide encrypted message parts, and to decrypt it: .
- the encrypted message parts undergo a decryption exponentiation operation to provide decrypted message parts,

<u>characterised by the fact that:</u>

- the message parts to be encrypted being presented in the form of numbers smaller than the smaller of the factors p and q,
- the decryption exponentiation operation includes:

  • a step of determining a decryption modulus (10, 14) selected from the said factors,
  • a preliminary step to effect a first modular reduction (10, 12) on the number "d" with a modulus equal to the said decryption modulus decreased by one unit to provide a reduced number,
  • a step to effect a second modular reduction (K12) on the encrypted message parts with a modulus equal to the said decryption modulus to provide reduced encrypted message parts,
  • a modular exponentiation step (K14) effected on the reduced encrypted message parts with a modulus equal to the said decryption modulus and with an exponent equal to the said reduced number.

3. Use of the system for communication of encrypted messages as described in claim 1 in a user device, such as a micro-chip card, including an encryption device formed:

- of slicing means (3) for slicing the message to be encrypted into at least one message part to be encrypted,
- of exponentiation means (5) to perform, on each message part to be encrypted, a modular exponentiation operation of modulus "N" and with an exponent equal to a first of the said key numbers, in order to provide an encrypted message part, and at least one decryption device, characterised by the fact that the decryption device is formed:
- of modulus determination means (10, 14) to determine a decryption modulus selected from the said factors,
- of first modular reduction means (10, 12) to effect a first modular reduction on the number "d" with a modulus equal to the said decryption modulus decreased by one unit to provide a reduced number,
- of second reduction means (K12) to effect a second modular reduction on each encrypted message part with a modulus equal to the said decryption modulus in order to provide a reduced encrypted message part,
- of second exponentiation means (K14) to effect a modular exponentiation on each reduced encrypted message part with a modulus equal to the said decryption modulus and with an exponent equal to the said reduced number in order to restore the said message.

4. Use of the system for communication of encrypted messages as described in claim 1 in a server including an encryption device and a decryption device to serve intermediaries with user devices, characterised by the fact that its decryption device is formed:

- of modulus determination means (10, 14) to determine a decryption modulus selected from the said factors,

- of first modular reduction means (10, 12) to effect a first modular reduction on the number "d" with a modulus equal to the said decryption modulus decreased by one unit in order to provide a reduced number,
- of second reduction means (K12) to effect a second modular reduction on each encrypted message part with a modulus equal to the said decryption modulus in order to provide a reduced encrypted message part,
- of second exponentiation means (K14) to effect a modular exponentiation on each reduced encrypted message part with a modulus equal to the said decryption modulus and with an exponent equal to the said reduced number, in order to restore the said message.

**Patentansprüche**

1. System zur Kommunikation von verschlüsselten Nachrichten unter Verwendung von RSA, das Schlüsselzahlen "d" und "e" und eine Modulzahl N voraussetzt, wie "N", die das Produkt von zwei Faktoren "p" und "q" ist, die Primzahlen sind, N=p.q, und daß e.d=$1_{\mod \varphi(N)}$, wo $\varphi(N)$ die Euler'sche Anzeigefunktion ist, welches System einerseits wenigstens eine Verschlüsselungsvorrichtung, gebildet aus:

- Aufteilungsmitteln (3), um die zu verschlüsselnde Nachricht in wenigstens einen Teil der zu verschlüsselnden Nachricht aufzuteilen, der zumindest so klein ist wie die Faktoren p und q,
- Potenziermittel (5), um auf jeden Teil der zu verschlüsselnden Nachricht eine modulare Potenzieroperation des Moduls "N" und mit einem Exponenten gleich einer ersten der Schlüsselzahlen durchzuführen, um einen Teil der verschlüsselten Nachricht zur Verfügung zu stellen, und andererseits wenigstens eine Entschlüsselungsvorrichtung umfaßt,

dadurch gekennzeichnet, daß die Entschlüsselungsvorrichtung gebildet ist aus:

- Mitteln zur Bestimmung des Moduls (10, 14), um ein aus diesen Faktoren gewähltes Entschlüsselungsmodul zu bestimmen,
- ersten modularen Reduktionsmitteln (10, 12), um eine erste modulare Reduktion auf der Zahl "d" mit einem Modul gleich dem um eine Einheit verringerten Entschlüsselungsmodul durchzuführen, um eine reduzierte Zahl zur Verfügung zu stellen,
- zweiten Reduktionsmitteln (K12), um eine zweite modulare Reduktion auf jedem Teil der verschlüsselten Nachricht mit einem Modul gleich dem Entschlüsselungsmodul durchzuführen, um einen reduzierten Teil der verschlüsselten Nachricht zur Verfügung zu stellen,
- zweiten Potenziermitteln (K14), um eine modulare Potenzierung auf jedem reduzierten Teil der verschlüsselten Nachricht mit einem Modul gleich dem Entschlüsselungsmodul und mit einem Exponenten gleich der reduzierten Zahl durchzuführen, um die Nachricht wiederherzustellen.

2. Verschlüsselungs-Entschlüsselungsverfahren des RSA-Typs, gemäß welchem für eine Verschlüsselung einer Nachricht:

- Anzahlen von Schlüsseln "d" und "e" und eine Modulzahl N, wie "N", die das Produkt von zwei Faktoren "p" und "q" ist, die Primzahlen sind, N=p.q, und daß e.d=$1_{\mod \varphi(N)}$, WO $\varphi(N)$ die Euler'sche Anzeigefunktion ist, definiert werden,
- die Nachricht in Teile der zu verschlüsselnden Nachricht zerlegt (3) wird,
- jeder Teil einer modularen Potenzierfunktion (5) des Moduls "N" und mit einem Exponenten gleich einer der ersten Schlüsselzahlen unterworfen wird, um Teile der verschlüsselten Nachricht zur Verfügung zu stellen und um sie zu entschlüsseln:
- die Teile der verschlüsselten Nachrichten einer Potenzieroperation einer Entschlüsselung unterworfen werden, um die Teile der entschlüsselten Nachricht zur Verfügung zu stellen,

dadurch gekennzeichnet, daß:

- die Teile der zu verschlüsselnden Nachricht in Form von Zahlen, welche zumindest kleiner als die Faktoren p und q sind, dargestellt werden,
- die Potenzieroperation der Entschlüsselung umfaßt:

    einen Bestimmungsschritt eines Entschlüsselungsmoduls (10, 14) gewählt unter den Faktoren,
    einen Vorabschritt, um eine erste modulare Reduktion (10, 12) auf der Zahl "d" mit einem Modul gleich dem um eine Einheit verringerten Verschlüsselungsmodul durchzuführen, um eine reduzierte Zahl zur Verfügung zu stellen,
einen Schritt, um eine zweite modulare Reduktion (K12) auf die Teile der verschlüsselten Nachrichten mit einem Modul gleich dem Entschlüsselungsmodul durchzuführen, um reduzierte Teile der verschlüsselten Nachricht zur Verfügung zu stellen,
einen modularen Potenzierschritt (K14), der auf die reduzierten Teile der verschlüsselten Nachricht mit einem Modul gleich dem Entschlüsselungsmodul und mit einem Exponenten gleich der reduzierten Zahl durchgeführt wird.

3. Verwendung des Systems zur Kommunikation von verschlüsselten Nachrichten gemäß Anspruch 1 in einer Benutzervorrichtung, wie einer Chipkarte, umfassend eine Verschlüsselungsvorrichtung, gebildet aus:

- Aufteilungsmitteln (3), um die zu verschlüsselnde Nachricht in wenigstens einen Teil der zu verschlüsselnden Nachricht aufzuteilen,
- Potenziermitteln (5), um auf jeden Teil der zu verschlüsselnden Nachricht eine modulare Potenzierfunktion des Moduls "N" und mit einem Exponenten gleich einer ersten der Schlüsselzahlen durchzuführen, um einen Teil der verschlüsselten Nachricht zur Verfügung zu stellen, und wenigstens eine Verschlüsselungsvorrichtung, dadurch gekennzeichnet, daß die Entschlüsselungsvorrichtung gebildet ist aus:
- Modulbestimmungsmitteln (10, 14), um ein aus den Faktoren gewähltes Entschlüsselungsmodul zu bestimmen,
- ersten modularen Reduktionsmitteln (10, 12), um eine erste modulare Reduktion auf der Zahl "d" mit einem Modul gleich dem um eine Einheit verringerten Entschlüsselungsmodul durchzuführen, um eine reduzierte Zahl zur Verfügung zu stellen,
- zweiten Reduktionsmitteln (K12), um eine zweite modulare Reduktion auf jedem Teil der verschlüsselten Nachricht mit einem Modul gleich dem Entschlüsselungsmodul durchzuführen, um einen reduzierten Teil der verschlüsselten Nachricht zur Verfügung zu stellen,
- zweiten Potenziermitteln (K14), um eine modulare Potenzierung auf jedem Teil der reduzierten, verschlüsselten Nachricht mit einem Modul gleich dem Entschlüsselungsmodul und mit einem Exponenten gleich der reduzierten Zahl durchzuführen, um die Nachricht wiederherzustellen.

4. Verwendung des Systems zur Kommunikation von verschlüsselten Nachrichten gemäß Anspruch 1 in einem Server, umfassend eine Verschlüsselungsvorrichtung und eine Entschlüsselungsvorrichtung, um als Zwischenglied zwischen bzw. mit Benutzervorrichtungen zu dienen, dadurch gekennzeichnet, daß die Entschlüsselungsvorrichtung gebildet ist aus:

- Modulbestimmungsmitteln (10, 14), um ein aus den Faktoren gewähltes Entschlüsselungsmodul zu bestimmen,
- ersten modularen Reduktionsmitteln (10, 12), um eine erste modulare Reduktion auf der Zahl "d" mit einem Modul gleich dem um eine Einheit verringerten Entschlüsselungsmodul durchzuführen, um eine reduzierte Zahl zur Verfügung zu stellen,
- zweiten Reduktionsmitteln (K12), um eine zweite modulare Reduktion auf jedem Teil der verschlüsselten Nachricht mit einem Modul gleich dem Entschlüsselungsmodul durchzuführen, um einen reduzierten Teil der verschlüsselten Nachricht zur Verfügung zu stellen,
- zweiten Potenziermitteln (K14), um eine modulare Potenzierung auf jedem Teil der reduzierten, verschlüsselten Nachricht mit einem Modul gleich dem Entschlüsselungsmodul und mit einem Exponenten gleich der reduzierten Zahl durchzuführen, um die Nachricht wiederherzustellen.

FIG. 1

FIG. 2

FIG. 3

FIG. 4

FIG. 5